(19) Europäisches Patentamt
European Patent Office
Office européen des brevets

(11) EP 2 090 170 A1

(12) **EUROPÄISCHE PATENTANMELDUNG**

(43) Veröffentlichungstag:
**19.08.2009 Patentblatt 2009/34**

(21) Anmeldenummer: **08151302.0**

(22) Anmeldetag: **12.02.2008**

(51) Int Cl.:
***A01N 43/653*** *(2006.01)* ***A01P 7/02*** *(2006.01)*
***A01P 7/04*** *(2006.01)* *A01N 47/02 (2006.01)*
*A01N 53/00 (2006.01)* *A01N 51/00 (2006.01)*
*A01N 47/40 (2006.01)* *A01N 43/40 (2006.01)*
*A01N 43/22 (2006.01)* *A01N 43/90 (2006.01)*
*A01N 43/707 (2006.01)* *A01N 47/30 (2006.01)*
*A01N 43/36 (2006.01)* *A01N 47/34 (2006.01)*
*A01N 43/68 (2006.01)* *A01N 37/40 (2006.01)*
*A01N 37/52 (2006.01)* *A01N 43/56 (2006.01)*
*A01N 43/58 (2006.01)* *A01N 47/38 (2006.01)*
*A01N 43/08 (2006.01)* *A01N 47/06 (2006.01)*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Bayer CropScience AG**
**40789 Monheim (DE)**

(72) Erfinder: **Die Erfindernennung liegt noch nicht vor**

(54) **Wirkstoffkombinationen mit insektiziden und akariziden Eigenschaften**

(57) Die neuen Wirkstoffkombinationen enthaltend Verbindungen der Formel (I) und der Gruppe (II) besitzen sehr gute insektizide und akarizide Eigenschaften.

EP 2 090 170 A1

## Beschreibung

Die vorliegende Erfindung betrifft neue Wirkstoffkombinationen, die aus dem Wirkstoff der Formel (I) in Kombination mit weiteren insektiziden Wirkstoffen (II) bestehen und sehr gut zur Bekämpfung von tierischen Schädlingen wie Insekten und / oder unerwünschten Akariden geeignet sind.

Die Verbindung der Formel (I) ist aus WO 1999/55668 bekannt und ihre insektizide Wirkung beschrieben. Ebenso sind die mit ihrem "common name" genannten Wirkstoffe (II) beispielsweise aus "The Pesticide Manual" 13th Ed., British Crop Protection Council 2003, und der Webseite http://www.alanwood.net/pesticides/ bekannt.

Die akarizide und / oder insektizide Wirksamkeit und / oder Wirkungsbreite und / oder die Pflanzenverträglichkeit der bekannten Verbindungen, insbesondere gegenüber Kulturpflanzen, ist jedoch nicht immer ausreichend.

Es wurde nun gefunden, dass Wirkstoffkombinationen enthaltend die Verbindung der Formel (I)

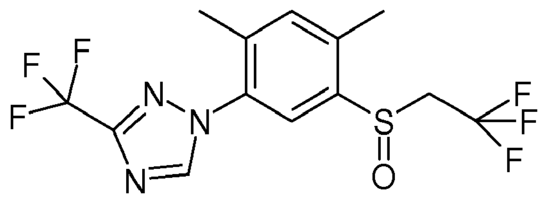

(I)

und ein oder mehrere weitere Insektizide und / oder Akarizide der Gruppe (II) sich sehr gut zur Bekämpfung von tierischen Schädlingen wie Insekten und / oder Akariden eignen.

Die Wirkstoffe der Gruppe (II) sind gemäß der IRAC-Klassifizierung (Version 5.3 Juli 2007) in verschiedene Klassen (1-29) und Gruppen gemäß ihres Wirkmechanismus zugeordnet:

**Insektizide / Akarizide / Nematizide:**

Acetylcholinesterase (AChE) Inhibitoren II-1

II-1.A Carbamate,

zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15), Dimetilan (II-1.A-16), Ethiofencarb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)

II-1.B Organophosphate,

zum Beispiel Acephate (II-1.B-1), Azamethiphos (II-1.B-2), Azinphos (-methyl, -ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/-ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Diazinon (II-1.B-20), Dichlofenthion (II-1.B-21), Dichlorvos/DDVP (II-1.B-22), Dicrotophos (II-1.B-23), Dimethoate (II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fenamiphos (II-1.B-33), Fenitrothion (II-1.B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), Iodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (II-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos

(II-1.B-70), Propetamphos (II-1.B-71), Prothiofos (II-1.B-72), Prothoate (II-1.B-73), Pyraclofos (II-1.B-74), Pyridaphenthion (II-1.B-75), Pyridathion (II-1.B-76), Quinalphos (II-1.B-77), Sebufos (II-1.B-78), Sulfotep (II-1.B-79), Sulprofos (II-1.B-80), Tebupirimfos (II-1.B-81), Temephos (II-1.B-82), Terbufos (II-1.B-83), Tetrachlorvinphos (II-1.B-84), Thiometon (II-1.B-85), Triazophos (II-1.B-86), Triclorfon (II-1.B-87), Vamidothion (II-1.B-88)

GABA-gesteuerte Chlorid-Kanal-Antagonisten II-2

II-2A Organochlorine,

zum Beispiel Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)

II-2B Fiprole (Phenylpyrazole),

zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)

Natrium-Kanal-Modulatoren / Spannungsabhängige Natrium-Kanal-Blocker II-3

II-3 Pyrethroide,

zum Beispiel Acrinathrin (II-3-1), Allethrin (d-cis-trans, d-trans) (II-3-2), Beta-Cyfluthrin (II-3-3), Bifenthrin (11-3-4), Bioallethrin (II-3-5), Bioallethrin-S-cyclopentyl-isomer (11-3-6), Bioethanomethrin (II-3-7), Biopermethrin (11-3-8), Bioresmethrin (II-3-9), Chlovaporthrin (II-3-10), Cis-Cypermethrin (II-3-11), Cis-Resmethrin (II-3-12), Cis-Permethrin (II-3-13), Clocythrin (II-3-14), Cycloprothrin (II-3-15), Cyfluthrin (II-3-16), Cyhalothrin (II-3-17), Cypermethrin (alpha-, beta-, theta-, zeta-)(II-3-18), Cyphenothrin (II-3-19), Deltamethrin (II-3-20), Empenthrin (1R-isomer) (II-3-21), Esfenvalerate (II-3-22), Etofenprox (II-3-23), Fenfluthrin (II-3-24), Fenpropathrin (II-3-25), Fenpyrithrin (II-3-26), Fenvalerate (II-3-27), Flubrocythrinate (II-3-28), Flucythrinate (II-3-29), Flufenprox (II-3-30), Flumethrin (II-3-31), Fluvalinate (II-3-32), Fubfenprox (II-3-33), Gamma-Cyhalothrin (II-3-34), Imiprothrin (II-3-35), Kadethrin (II-3-36), Lambda-Cyhalothrin (II-3-37), Metofluthrin (II-3-38), Permethrin (cis-, trans-) (II-3-39), Phenothrin (1R-trans isomer) (II-3-40), Prallethrin (II-3-41), Profluthrin (II-3-42), Protrifenbute (II-3-43), Pyresmethrin (II-3-44), Resmethrin (II-3-45), RU 15525 (II-3-46), Silafluofen (II-3-47), Tau-Fluvalinate (II-3-48), Tefluthrin (II-3-49), Terallethrin (II-3-50), Tetramethrin (-1R- isomer) (II-3-51), Tralomethrin (II-3-52), Transfluthrin (II-3-53), ZXI 8901 (II-3-54), Pyrethrin (pyrethrum) (II-3-55), Eflusilanat (II-3-56), DDT (II-3-57), Methoxychlor (II-3-58),

Nikotinerge Acetylcholin-Rezeptor-Agonisten/-Antagonisten II-4

II-4A Chloronicotinyle,

zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazine (II-4A-7), Thiacloprid (II-4A-8), Thiamethoxam (II-4A-9),

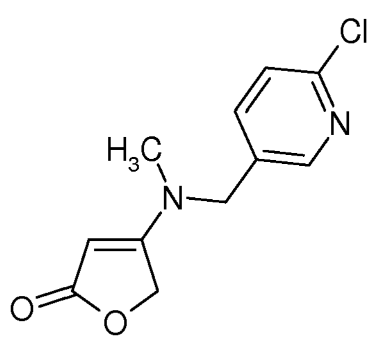

(II- 4A-10), bekannt aus EP 0 539 588,

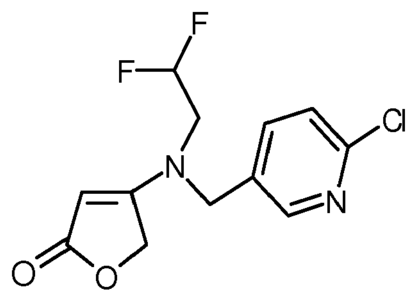

(II-4A-11), bekannt aus WO 2007/115644,

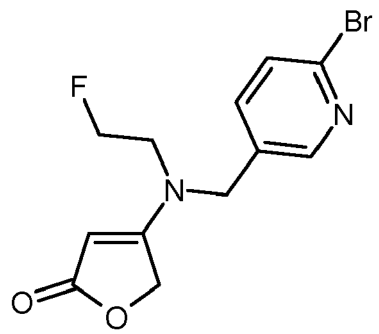

(II- 4A-12), bekannt aus WO 2007/115644,

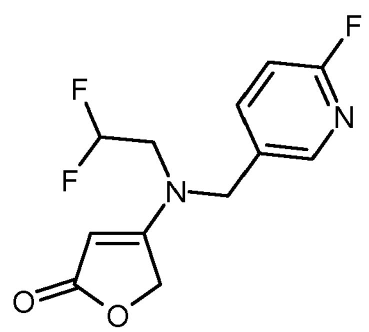

(II- 4A-13), bekannt aus WO 2007/115644,

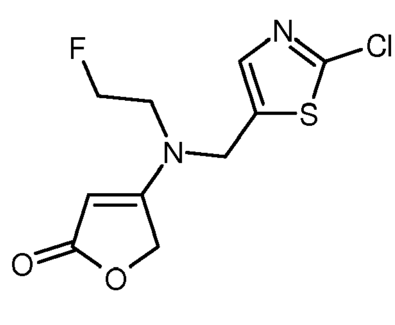

(II- 4A-14),bekannt aus WO 2007/115644,

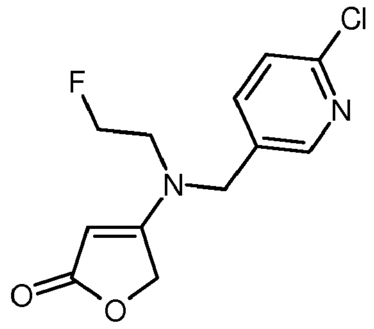

(II- 4A-15), bekannt aus WO 2007/115644,

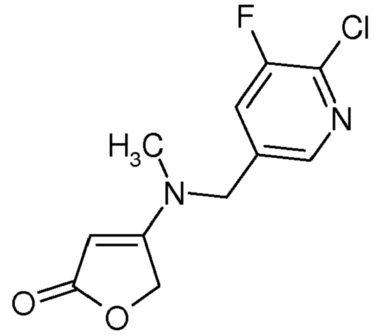

(II- 4A-16), bekannt aus WO 2007/115643,

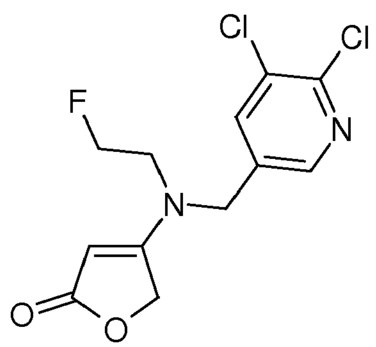

(II- 4A-17), bekannt aus WO 2007/115646,

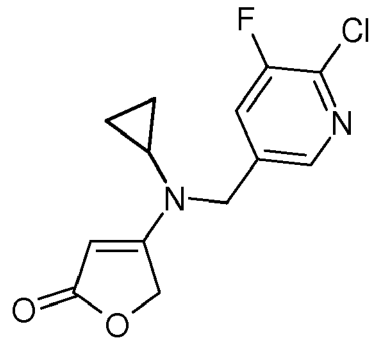

(II- 4A-18), bekannt aus WO 2007/115643,

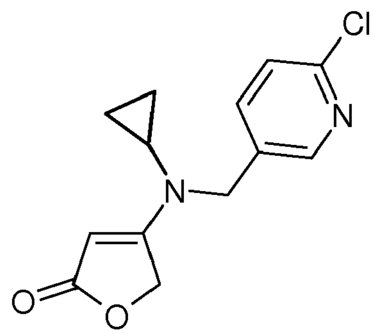

(II- 4A-19), bekannt aus EP 0 539 588,

II-4B Nicotine (II-4B-1), Bensultap (II-4B-2), Cartap (II-4B-3), Thiosulfap-Natrium (II-4B-4), Thiocylam (II-4C-4) Allosterische Acetylcholin-Rezeptor-Modulatoren (Agonisten)

II-5 Spinosyne, zum Beispiel Spinosad (II-5-1), Spinetoram (II-5-2) Chlorid-Kanal-Aktivatoren

II-6 Mectine / Macrolide, zum Beispiel Abamectin (II-6-1), Emamectin (II-6-2), Emamectin-benzoate (II-6-3), Ivermectin (II-6-4), Lepimectin (II-6-5), Milbemectin (II-6-6)

II-7A Juvenilhormon Analoge, zum Beispiel Hydroprene (II-7A-1), Kinoprene (II-7A-2), Methoprene (II-7A-3), Epofenonane (II-7A-4), Triprene (II-7A-5), Fenoxycarb (II-7B-1),
Pyriproxifen (II-7C-1), Diofenolan (II-7C-2) Wirkstoffe mit unbekannten oder nicht spezifischen Wirkmechanismen

II-8 Begasungsmittel, zum Beispiel Methyl bromide (II-8A-1), Chloropicrin (II-8B-1), Sulfuryl fluoride (II-8C-1)

II-9 Selektive Fraßhemmer, zum Beispiel Cryolite (II-9A-1), Pymetrozine (II-9B-1), NNI0101 (II-9B-2), Flonicamid (II-9C-1)

II-10 Milbenwachstumsinhibitoren, zum Beispiel Clofentezine (II-10A-1), Hexythiazox (II-10A-2), ), Etoxazole (II-10B-1)
Inhibitoren der oxidativen Phosphorylierung, ATP-Disruptoren II-12

II-12A Diafenthiuron (II-12A-1)

II-12B Organozinnverbindungen, zum Beispiel Azocyclotin (II-12B-1), Cyhexatin (II-12B-2), Fenbutatin-oxide (II-12B-3)

II-12C Propargite (II-12C-1), Tetradifon (II-12C-2)
Entkoppler der oxidativen Phoshorylierung durch Unterbrechung des H-Protongradienten II-13
Chlorfenapyr (II-13-1)
Binapacyrl (II-13-2), Dinobuton (II-13-3), Dinocap (II-13-4), DNOC (II-13-5)
Mikrobielle Disruptoren der Insektendarmmembran
Bacillus thuringiensis-Stämme (II-13-6)
Inhibitoren der Chitinbiosynthese

II-15 Benzoylharnstoffe, zum Beispiel Bistrifluron (II-15-1), Chlorfluazuron (II-15-2), Diflubenzuron (II-15-3), Fluazuron (II-15-4), Flucycloxuron (II-15-5), Flufenoxuron (II-15-6), Hexaflumuron (II-15-7), Lufenuron (II-15-8), Novaluron (II-15-9), Noviflumuron (II-15-10), Penfluron (II-15-11), Teflubenzuron (II-15-12), Triflumuron (II-15-13)

II-16 Buprofezin (II-16-1)
Häutungsstörende Wirkstoffe Cyromazine (II-17-1)
Ecdysonagonisten/disruptoren (II-18)

II-18A Diacylhydrazine, zum Beispiel Chromafenozide (II-18A-1), Halofenozide (II-18A-2), Methoxyfenozide (II-18A-3), Tebufenozide (II-18A-4), JS-118 (II-18A-5)
Azadirachtin (II-18B-1)
Oktopaminerge Agonisten
zum Beispiel Amitraz (II-19-1)

II-20 Seite-III-Elektronentransportinhibitoren/Seite-II-Elektronentransportinhibitoren
Hydramethylnon (II-20A-1)
Acequinocyl (II-20B-1)
Fluacrypyrim (II-20C-1)
Cyflumetofen (II-20D-1), Cyenopyrafen (II-20D-2)
Elektronentransportinhibitoren

II-21 Seite-I-Elektronentransportinhibitoren
aus der Gruppe der METI-Akarizide, zum Beispiel Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)

II-22 Spannungsabhängige Natriumkanal-Blocker
zum Beispiel Indoxacarb (II-22A-1)
zum Beispiel Metaflumizone (BAS 3201) (II-22B-1)

II-23 Inhibitoren der Fettsäurebiosynthese

II-23A Tetronsäure-Derivate zum Beispiel Spirodiclofen (II-23A-1), Spiromesifen (II-23A-2)

II-23B Tetramsäure-Derivate, zum Beispiel Spirotetramat (II-23B-1)

II-25 Neuronale Inhibitoren mit unbekannten Wirkmechanismus
Bifenazate (II-25-1)
Ryanodinrezeptor-Effektoren

II-28 Diamide, zum Beispiel Flubendiamide (II-28-1),

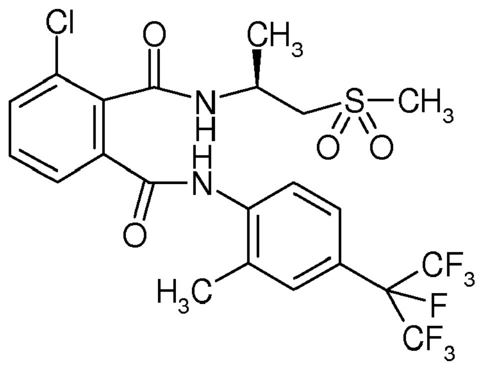

(II-28-2), bekannt aus WO 06/022225,

Chlorantraniliprole (Rynaxypyr) (II-28-3), Cyazypyr

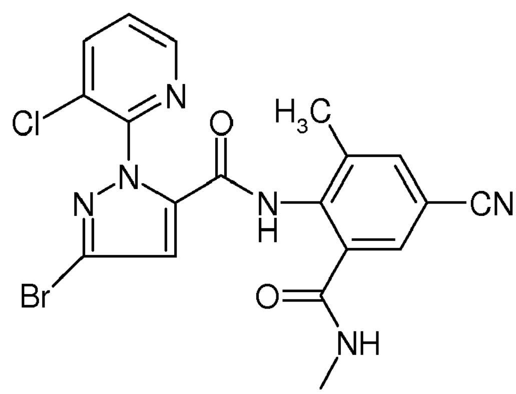

(II-28-4), bekannt aus WO 04/067528

II-29 Wirkstoffe mit unbekanntem Wirkmechanismis Amidoflumet (II-29-1), Benclothiaz (II-29-2), Benzoximate (II-29-3), Bromopropylate (II-29-4), Buprofezin (II-29-5), Chinomethionat (II-29-6), Chlordimeform (II-29-7), Chlorobenzilate (II-29-8), Clothiazoben (II-29-9), Cycloprene (II-29-10), Dicofol (II-29-11), Dicyclanil (II-29-12), Fenoxacrim (II-29-13), Fentrifanil (II-29-14), Flubenzimine (II-29-15), Flufenerim (II-29-16), Flutenzin (II-29-17), Gossyplure (II-29-18), Japonilure (II-29-19), Metoxadiazone (II-29-20), Petroleum (II-29-21), Potassium oleate (II-29-22), Pyridalyl (II-29-23), Sulfluramid (II-29-24), Tetrasul (II-29-25), Triarathene (II-29-26),Verbutin (II-29-27).

Wenn im Rahmen dieser Beschreibung die Kurzform des "common name" eines Wirkstoffes verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest ein der von dem "common name" umfassten Verbindungen, häufig eine bevorzugte Verbindung.

Überraschenderweise ist die insektizide und / oder akarizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Bevorzugt sind Kombinationen enthaltend den Wirkstoff der Formel (I) und mindestens einen der folgenden Wirkstoffe der Gruppe (II):

Acrinathrin, Alpha-Cypermethrin, Betacyfluthrin, Cyhalothrin, Cypermethrin, Deltamethrin, Esfenvalerat, Etofenprox, Fenpropathrin, Fenvalerat, Flucythrinat, Lambda-Cyhalothrin, Gamma-Cyhalothrin, Permethrin, Tau-fluvalinat, Tralomethrin, Zeta-Cypermethrin, Cyfluthrin, Bifenthrin, Cycloprothrin, Eflusilanat, Fubfenprox, Pyrethrin, Resmethrin, Imidacloprid, Acetamiprid, Thiamethoxam, Nitenpyram, Thiacloprid, Dinotefuran, Clothianidin, Imidaclothiz, Chlorfluazuron, Diflubenzuron, Lufenuron, Teflubenzuron, Triflumuron, Novaluron, Flufenoxuron, Hexaflumuron, Bistrifluoron, Noviflumuron, Buprofezin, Cyromazine, Methoxyfenozide, Tebufenozide, Halofenozide, JS-118, Chromafenozide, Endosulfan, Fipronil, Ethiprole, Pyrafluprole, Pyriprole, Flubendiamide, Verbindung (II-28-2), Chlorantraniliprole (Rynaxypyr), Cyazypyr, Emamectin, Emamectin benzoate, Abamectin, Ivermectin, Milbemectin, Lepimectin, Tebufenpyrad, Fenpyroximat, Pyridaben, Fenazaquin, Pyrimidifen, Tolfenpyrad, Dicofol, Cyenopyrafen, Cyflumetofen, Acequinocyl, Fluacrypyrin, Bifenazate, Diafenthiuron, Etoxazole, Clofentezine, Spinosad, Triarathen, Tetradifon, Propargit, Hexythiazox, Bromopropylat, Chinomethionat, Amitraz, NNI 0101, Pymetrozine, Flonicamid, Pyriproxyfen, Diofenolan, Chlorfenapyr, Metaflumizone, Indoxacarb, Chlorpyrifos, Spirodiclofen, Spiromesifen, Spirotetramat, Pyridalyl, Verbindung (II-4A-10), Verbindung (II-4A-11), Verbindung (II-4A-12) Verbindung (II-4A-13) Verbindung (II-4A-14) Verbindung (II-4A-15) Verbindung (II-4A-16) Verbindung (II-4A-17) Verbindung (II-4A-18) Verbindung (II-4A-19), Spinetoram.

Besonders bevorzugt sind Wirkstoffkombinationen enthaltend den Wirkstoff der Formel (I) und mindestens einen der folgenden Wirkstoffe der Gruppe (II):

Alpha-Cypermethrin, Betacyfluthrin, Cypermethrin, Deltamethrin, Lambda-Cyhalothrin, Gamma-Cyhalothrin, Bifenthrin, Imidacloprid, Acetamiprid, Thiamethoxam, Thiacloprid, Dinotefuran, Clothianidin, Lufenuron, Triflumuron, Flufenoxuron, Buprofezin, Cyromazine, Methoxyfenozide, Fipronil, Ethiprole, Flubendiamide, Verbindung (II-28-2), Chlorantraniliprole (Rynaxypyr), Cyazypyr, Emamectin, Emamectin benzoate, Abamectin, Milbemectin, Fenpyroximat, Pyridaben, Cyenopyrafen, Diafenthiuron, Spinosad, Amitraz, Pymetrozine, Flonicamid, Chlorfenapyr, Metaflumizone, Indoxacarb, Spirodiclofen, Spiromesifen, Spirotetramat, Pyridalyl, Verbindung (II-4A-10), Verbindung (II-4A-11),

Die Wirkstoffkombinationen können darüber hinaus auch weitere fungizid, akarizid oder insektizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich die verbesserte Wirkung. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen Wirkstoffe der Formel (I) und den Mischpartner der Gruppe (II) in den in der nachfolgenden Tabelle angegeben bevorzugten und besonders bevorzugten Mischungsverhältnissen:

- die Mischungsverhältnisse basieren auf Gewichtsverhältnissen. Das Verhältnis ist zu verstehen als Wirkstoff der Formel (I):Mischpartner bis Formel (I):Mischpartner

| | Mischpartner | bevorzugtes Mischungs verhältnis | besonders bevorzugtes Mischungsverhältnis | ganz besonders bevorzugtes Mischungsverhältnis |
|---|---|---|---|---|
| 1. | Acrinathrin | 125:1 bis 1:125 | 25:1 bis 1:25 | 5:1 bis 1:5 |
| 2. | Alpha-Cypermethrin | 125:1 bis 1:125 | 25:1 bis 1:25 | 5:1 bis 1:5 |
| 3. | Betacyfluthrin | 125:1 bis 1:125 | 25:1 bis 1:25 | 5:1 bis 1:5 |
| 4. | Cyhalothrin | 125:1 bis 1:125 | 25:1 bis 1:25 | 5:1 bis 1:5 |
| 5. | Cypermethrin | 125:1 bis 1:125 | 25:1 bis 1:25 | 5:1 bis 1:5 |
| 6. | Deltamethrin | 125:1 bis 1:125 | 25:1 bis 1:25 | 5:1 bis 1:5 |
| 7. | Esfenvalerat | 125:1 bis 1:125 | 25:1 bis 1:25 | 5:1 bis 1:5 |
| 8. | Etofenprox | 125:1 bis 1:125 | 25:1 bis 1:25 | 5:1 bis 1:5 |
| 9. | Fenpropathrin | 125:1 bis 1:125 | 25:1 bis 1:25 | 5:1 bis 1:5 |
| 10. | Fenvalerat | 125:1 bis 1:125 | 25:1 bis 1:25 | 5:1 bis 1:5 |

(fortgesetzt)

| | Mischpartner | bevorzugtes Mischungs verhältnis | besonders bevorzugtes Mischungsverhältnis | ganz besonders bevorzugtes Mischungsverhältnis |
|---|---|---|---|---|
| 11. | Flucythrinat | 125:1 bis 1:125 | 25:1 bis 1:25 | 5:1 bis 1:5 |
| 12.a | Lambda-Cyhalothrin | 125:1 bis 1:125 | 25:1 bis 1:25 | 5:1 bis 1:5 |
| 12.b | Gamma-Cyhalothrin | 125:1 bis 1:125 | 25:1 bis 1:25 | 5:1 bis 1:5 |
| 13. | Permethrin | 125:1 bis 1:125 | 25:1 bis 1:25 | 5:1 bis 1:5 |
| 14. | Tau-fluvalinat | 125:1 bis 1:125 | 25:1 bis 1:25 | 5:1 bis 1:5 |
| 15. | Tralomethrin | 125:1 bis 1:125 | 25:1 bis 1:25 | 5:1 bis 1:5 |
| 16. | Zeta-Cypermethrin | 125:1 bis 1:125 | 25:1 bis 1:25 | 5:1 bis 1:5 |
| 17. | Cyfluthrin | 125:1 bis 1:125 | 25:1 bis 1:25 | 5:1 bis 1:5 |
| 18. | Bifenthrin | 125:1 bis 1:125 | 25:1 bis 1:25 | 5:1 bis 1:5 |
| 19. | Cycloprothrin | 125:1 bis 1:125 | 25:1 bis 1:25 | 5:1 bis 1:5 |
| 20. | Eflusilanat | 125:1 bis 1:125 | 25:1 bis 1:25 | 5:1 bis 1:5 |
| 21. | Fubfenprox | 125:1 bis 1:125 | 25:1 bis 1:25 | 5:1 bis 1:5 |
| 22. | Pyrethrin | 125:1 bis 1:125 | 25:1 bis 1:25 | 5:1 bis 1:5 |
| 23. | Resmethrin | 125:1 bis 1:125 | 25:1 bis 1:25 | 5:1 bis 1:5 |
| 24. | Imidacloprid | 125:1 bis 1:125 | 25:1 bis 1:25 | 5:1 bis 1:5 |
| 25. | Acetamiprid | 125:1 bis 1:125 | 25:1 bis 1:25 | 5:1 bis 1:5 |
| 26. | Thiamethoxam | 125:1 bis 1:125 | 25:1 bis 1:25 | 5:1 bis 1:5 |
| 27. | Nitenpyram | 125:1 bis 1:125 | 25:1 bis 1:25 | 5:1 bis 1:5 |
| 28. | Thiacloprid | 125:1 bis 1:125 | 25:1 bis 1:25 | 5:1 bis 1:5 |
| 29. | Dinotefuran | 125:1 bis 1:125 | 25:1 bis 1:25 | 5:1 bis 1:5 |
| 30. | Clothianidin | 125:1 bis 1:125 | 25:1 bis 1:25 | 5:1 bis 1:5 |
| 31. | Imidaclothiz | 125:1 bis 1:125 | 25:1 bis 1:25 | 5:1 bis 1:5 |
| 32. | Chlorfluazuron | 125:1 bis 1:125 | 25:1 bis 1:25 | 5:1 bis 1:5 |
| 33. | Diflubenzuron | 125:1 bis 1:125 | 25:1 bis 1:25 | 5:1 bis 1:5 |
| 34. | Lufenuron | 125:1 bis 1:125 | 25:1 bis 1:25 | 5:1 bis 1:5 |
| 35. | Teflubenzuron | 125:1 bis 1:125 | 25:1 bis 1:25 | 5:1 bis 1:5 |
| 36. | Triflumuron | 125:1 bis 1:125 | 25:1 bis 1:25 | 5:1 bis 1:5 |
| 37. | Novaluron | 125:1 bis 1:125 | 25:1 bis 1:25 | 5:1 bis 1:5 |
| 38. | Flufenoxuron | 125:1 bis 1:125 | 25:1 bis 1:25 | 5:1 bis 1:5 |
| 39. | Hexaflumuron | 125:1 bis 1:125 | 25:1 bis 1:25 | 5:1 bis 1:5 |
| 40. | Bistrifluoron | 125:1 bis 1:125 | 25:1 bis 1:25 | 5:1 bis 1:5 |
| 41. | Noviflumuron | 125:1 bis 1:125 | 25:1 bis 1:25 | 5:1 bis 1:5 |
| 42. | Buprofezin | 125:1 bis 1:125 | 25:1 bis 1:25 | 5:1 bis 1:5 |
| 43. | Cyromazine | 125:1 bis 1:125 | 25:1 bis 1:25 | 5:1 bis 1:5 |
| 44. | Methoxyfenozide | 125:1 bis 1:125 | 25:1 bis 1:25 | 5:1 bis 1:5 |
| 45. | Tebufenozide | 125:1 bis 1:125 | 25:1 bis 1:25 | 5:1 bis 1:5 |

(fortgesetzt)

| | Mischpartner | bevorzugtes Mischungs verhältnis | besonders bevorzugtes Mischungsverhältnis | ganz besonders bevorzugtes Mischungsverhältnis |
|---|---|---|---|---|
| 46. | Halofenozide | 125:1 bis 1:125 | 25:1 bis 1:25 | 5:1 bis 1:5 |
| 47. | JS-118 | 125:1 bis 1:125 | 25:1 bis 1:25 | 5:1 bis 1:5 |
| 48. | Chromafenozide | 125:1 bis 1:125 | 25:1 bis 1:25 | 5:1 bis 1:5 |
| 49. | Endosulfan | 125:1 bis 1:125 | 25:1 bis 1:25 | 5:1 bis 1:5 |
| 50. | Fipronil | 125:1 bis 1:125 | 25:1 bis 1:25 | 5:1 bis 1:5 |
| 51. | Ethiprole | 125:1 bis 1:125 | 25:1 bis 1:25 | 5:1 bis 1:5 |
| 52. | Pyrafluprole | 125:1 bis 1:125 | 25:1 bis 1:25 | 5:1 bis 1:5 |
| 53. | Pyriprole | 125:1 bis 1:125 | 25:1 bis 1:25 | 5:1 bis 1:5 |
| 54. | Flubendiamide | 125:1 bis 1:125 | 25:1 bis 1:25 | 5:1 bis 1:5 |
| 55. | Verbindung (II-28-2) | 125:1 bis 1:125 | 25:1 bis 1:25 | 5:1 bis 1:5 |
| 56. | Chlorantraniliprole (Rynaxypyr) | 125:1 bis 1:125 | 25:1 bis 1:25 | 5:1 bis 1:5 |
| 57. | Cyazypyr | 125:1 bis 1:125 | 25:1 bis 1:25 | 5:1 bis 1:5 |
| 58. | Emamectin | 125:1 bis 1:125 | 25:1 bis 1:25 | 5:1 bis 1:5 |
| 59. | Emamectin benzoate | 125:1 bis 1:125 | 25:1 bis 1:25 | 5:1 bis 1:5 |
| 60. | Abamectin | 125:1 bis 1:125 | 25:1 bis 1:25 | 5:1 bis 1:5 |
| 61. | Ivermectin | 125:1 bis 1:125 | 25:1 bis 1:25 | 5:1 bis 1:5 |
| 62. | Milbemectin | 125:1 bis 1:125 | 25:1 bis 1:25 | 5:1 bis 1:5 |
| 63. | Lepimectin | 125:1 bis 1:125 | 25:1 bis 1:25 | 5:1 bis 1:5 |
| 64. | Tebufenpyrad | 125:1 bis 1:125 | 25:1 bis 1:25 | 5:1 bis 1:5 |
| 65. | Fenpyroximat | 125:1 bis 1:125 | 25:1 bis 1:25 | 5:1 bis 1:5 |
| 66. | Pyridaben | 125:1 bis 1:125 | 25:1 bis 1:25 | 5:1 bis 1:5 |
| 67. | Fenazaquin | 125:1 bis 1:125 | 25:1 bis 1:25 | 5:1 bis 1:5 |
| 68. | Pyrimidifen | 125:1 bis 1:125 | 25:1 bis 1:25 | 5:1 bis 1:5 |
| 69. | Tolfenpyrad | 125:1 bis 1:125 | 25:1 bis 1:25 | 5:1 bis 1:5 |
| 70. | Dicofol | 125:1 bis 1:125 | 25:1 bis 1:25 | 5:1 bis 1:5 |
| 71. | Cyenopyrafen | 125:1 bis 1:125 | 25:1 bis 1:25 | 5:1 bis 1:5 |
| 72. | Cyflumetofen | 125:1 bis 1:125 | 25:1 bis 1:25 | 5:1 bis 1:5 |
| 73. | Acequinocyl | 125:1 bis 1:125 | 25:1 bis 1:25 | 5:1 bis 1:5 |
| 74. | Fluacrypyrin | 125:1 bis 1:125 | 25:1 bis 1:25 | 5:1 bis 1:5 |
| 75. | Bifenazate | 125:1 bis 1:125 | 25:1 bis 1:25 | 5:1 bis 1:5 |
| 76. | Diafenthiuron | 125:1 bis 1:125 | 25:1 bis 1:25 | 5:1 bis 1:5 |
| 77. | Etoxazole | 125:1 bis 1:125 | 25:1 bis 1:25 | 5:1 bis 1:5 |
| 78. | Clofentezine | 125:1 bis 1:125 | 25:1 bis 1:25 | 5:1 bis 1:5 |
| 79. | Spinosad | 125:1 bis 1:125 | 25:1 bis 1:25 | 5:1 bis 1:5 |
| 80. | Triarathen | 125:1 bis 1:125 | 25:1 bis 1:25 | 5:1 bis 1:5 |

(fortgesetzt)

| | Mischpartner | bevorzugtes Mischungs verhältnis | besonders bevorzugtes Mischungsverhältnis | ganz besonders bevorzugtes Mischungsverhältnis |
|---|---|---|---|---|
| 81. | Tetradifon | 125:1 bis 1:125 | 25:1 bis 1:25 | 5:1 bis 1:5 |
| 82. | Propargit | 125:1 bis 1:125 | 25:1 bis 1:25 | 5:1 bis 1:5 |
| 83. | Hexythiazox | 125:1 bis 1:125 | 25:1 bis 1:25 | 5:1 bis 1:5 |
| 84. | Bromopropylat | 125:1 bis 1:125 | 25:1 bis 1:25 | 5:1 bis 1:5 |
| 85. | Chinomethionat | 125:1 bis 1:125 | 25:1 bis 1:25 | 5:1 bis 1:5 |
| 86. | Amitraz | 125:1 bis 1:125 | 25:1 bis 1:25 | 5:1 bis 1:5 |
| 87. | NNI 0101 | 125:1 bis 1:125 | 25:1 bis 1:25 | 5:1 bis 1:5 |
| 88. | Pymetrozine | 125:1 bis 1:125 | 25:1 bis 1:25 | 5:1 bis 1:5 |
| 89. | Flonicamid | 125:1 bis 1:125 | 25:1 bis 1:25 | 5:1 bis 1:5 |
| 90. | Pyriproxyfen | 125:1 bis 1:125 | 25:1 bis 1:25 | 5:1 bis 1:5 |
| 91. | Diofenolan | 125:1 bis 1:125 | 25:1 bis 1:25 | 5:1 bis 1:5 |
| 92. | Chlorfenapyr | 125:1 bis 1:125 | 25:1 bis 1:25 | 5:1 bis 1:5 |
| 93. | Metaflumizone | 125:1 bis 1:125 | 25:1 bis 1:25 | 5:1 bis 1:5 |
| 94. | Indoxacarb | 125:1 bis 1:125 | 25:1 bis 1:25 | 5:1 bis 1:5 |
| 95. | Chlorpyrifos | 125:1 bis 1:125 | 25:1 bis 1:25 | 5:1 bis 1:5 |
| 96. | Spirodiclofen | 125:1 bis 1:125 | 25:1 bis 1:25 | 5:1 bis 1:5 |
| 97. | Spiromesifen | 125:1 bis 1:125 | 25:1 bis 1:25 | 5:1 bis 1:5 |
| 98. | Spirotetramat | 125:1 bis 1:125 | 25:1 bis 1:25 | 5:1 bis 1:5 |
| 99. | Pyridalyl | 125:1 bis 1:125 | 25:1 bis 1:25 | 5:1 bis 1:5 |
| 100. | Verbindung (II-4A-10) | 125:1 bis 1:125 | 25:1 bis 1:25 | 5:1 bis 1:5 |
| 101. | Verbindung (II-4A-11) | 125:1 bis 1:125 | 25:1 bis 1:25 | 5:1 bis 1:5 |
| 102. | Spinetoram | 125:1 bis 1:125 | 25:1 bis 1:25 | 5:1 bis 1:5 |

Die erfindungsgemäßen Wirkstoffkombinationen eignen sich zur Bekämpfung von tierischen Schädlingen, vorzugsweise Arthropoden und Nematoden, insbesondere Insekten und Spinnentieren, die im Weinanbau, Obstanbau, in der Landwirtschaft, der Tiergesundheit, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella accidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..

Aus der Ordnung der Siphonaptera z.B. Xenopsylla cheopis, Ceratophyllus spp..

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp..

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp..

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffkombinationen können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Auch eine Mischung mit anderen bekannten Wirkstoffen, wie Herbiziden oder mit Düngemitteln und Wachstumsregulatoren ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Erfindungsgemäß können alle Planzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Angießen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit der erfindungsgemäßen Wirkstoffmischung behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

**Anwendungsbeispiele**

Beispiel **A**

**Myzus persicae -Test**

| | | |
|---|---|---|
| Lösungsmittel: | 78 | Gewichtsteile Aceton |
| | 1,5 | Gewichtsteile Dimethylformamid |
| Emulgator: | 0,5 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*), die stark von der Grünen Pfirsichblattlaus (*Myzus persicae*) befallen sind, werden durch Spritzen mit der Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Formel.

Bei diesem Test zeigen z. B. die folgenden Wirkstoffkombinationen gemäß vorliegender Anmeldung eine synergistisch verstärkte Wirksamkeit im Vergleich zu den einzeln angewendeten Wirkstoffen:

Tabelle A 1

| Pflanzenschädigende Insekten<br>**Myzus persicae - Test** | | |
|---|---|---|
| **Wirkstoff** | **Konzentration in g/ha** | **Abtötung in % nach 1$^{d}$** |
| **Verbindung (I)** | 100 | 0 |
| | 20 | 0 |
| | 4 | 0 |
| | 0,8 | 0 |

(fortgesetzt)

| Pflanzenschädigende Insekten<br>**Myzus persicae - Test** | | | |
|---|---|---|---|
| **Wirkstoff** | **Konzentration in g/ha** | **Abtötung in % nach 1$^{d}$** | |
| | 0,16 | 0 | |
| **Alpha-Cypermethrin** | 0,032 | 0 | |
| **Verbindung (I) + Alpha-Cypermethrin (25 : 1)** erfindungsgemäß | **0,8 + 0,032** | **gef.* 20** | **ber.** 0** |
| Bifenthrin | 0,16 | 0 | |
| **Verbindung (I) + Bifenthrin (25 : 1)** erfindungsgemäß | **4 + 0,16** | **gef.* 20** | **ber.** 0** |
| Chlorfenapyr | 100 | 0 | |
| **Verbindung (I) + Chlorfenapyr (1 : 5)** erfindungsgemäß | **20 + 100** | **gef.* 70** | **ber.** 0** |
| **Clothianidin** | 0,16 | 50 | |
| **Verbindung (I) + Clothianidin (1 : 1)** erfindungsgemäß | **0,16 + 0,16** | **gef.* 70** | **ber.** 50** |
| **Dinotefuran** | 20 | 0 | |
| **Verbindung (I) + Dinotefuran (1 : 1)** erfindungsgemäß | **20 + 20** | **gef.* 50** | **ber.** 0** |
| **Fenpyroximate** | 20 | 0 | |
| **Verbindung (I) + Fenpyroximate (5 : 1)** erfindungsgemäß | **100 + 20** | **gef.* 20** | **ber.** 0** |
| **Fipronil** | 20 | 20 | |
| **Verbindung (I) + Fipronil (1 : 5)** erfindungsgemäß | **4 + 20** | **gef.* 70** | **ber.** 20** |
| **Gamma-Cyhalothrin** | 0,16 | 0 | |
| **Verbindung (I) + Gamma-Cyhalothrin (25 : 1)** erfindungsgemäß | **4 + 0,16** | **gef.* 20** | **ber.** 0** |
| **Imidacloprid** | 0,8 | 80 | |
| **Verbindung (I) + Imidacloprid (5 : 1)** erfindungsgemäß | **4 + 0,8** | **gef.* 90** | **ber.** 80** |
| **Pymetrozine** | 0,8 | 10 | |
| **Verbindung (I) + Pymetrozine (1 : 1)** erfindungsgemäß | **0,8 + 0,8** | **gef.* 30** | **ber.** 10** |
| **Thiacloprid** | 0,8 | 50 | |
| **Verbindung (I) + Thiacloprid (5:1)** erfindungsgemäß | **4 + 0,8** | **gef.* 80** | **ber.** 50** |
| **Thiamethoxam** | 0,8 | 70 | |
| **Verbindung (I) + Thiamethoxam (5 : 1)** erfindungsgemäß | **4 + 0,8** | **gef.* 90** | **ber.** 70** |
| **Verbindung (II-4A-11)** | 0,8 | 10 | |
| **Verbindung (I) + Verbindung (II-4A-11) (1 : 1)** erfindungsgemäß | **0,8 + 0,8** | **gef.* 60** | **ber.** 10** |

(fortgesetzt)

| Wirkstoff | Konzentration in g/ha | Abtötung in % nach 6d | |
|---|---|---|---|
| **Verbindung (I)** | 4<br>0,8<br>0,16 | 0 0<br>0<br>0 | |
| **Acetamiprid** | 0,8 | 40 | |
| **Verbindung (I) + Acetamiprid (1 : 1)** erfindungsgemäß | **0,8 + 0,8** | **gef.*** **70** | **ber.**** **40** |
| **Amitraz** | 20 | 70 | |
| **Verbindung (I) + Amitraz (1:5)** erfindungsgemäß | **4 + 20** | **gef.* 99** | **ber.** 70** |
| **Diafenthiuron** | 20 | 0 | |
| **Verbindung (I) + Diafenthiuron (5 : 1)** erfindungsgemäß | **100 + 20** | **gef.*** **70** | **ber.**** **0** |
| **Ethiprole** | 100 | 20 | |
| **Verbindung (I) + Ethiprole (1:5)** erfindungsgemäß | **20 + 100** | **gef.*** **80** | **ber.**** **20** |
| **Emamectin-Benzoate** | 4 | 20 | |
| **Verbindung (I) + Emamectin Benzoate (25 : 1)** erfindungsgemäß | **100 + 4** | **gef.*** **30** | **ber.**** **20** |
| **Flonicamid** | 4 | 40 | |
| **Verbindung (I) + Flonicamid (1:5)** erfindungsgemäß | **0,8 + 4** | **gef.*** **80** | **ber.**** **40** |
| **Lambda-Cyhalothrin** | 0,16 | 0 | |
| **Verbindung (I) + Lambda Cyhalothrin (25 : 1)** erfindungsgemäß | **4 + 0,16** | **gef.*** **50** | **ber.**** **0** |
| **Milbemectin** | 20 | 60 | |
| **Verbindung (I) + Milbemectin (5 : 1)** erfindungsgemäß | **100 + 20** | **gef.*** **70** | **ber.**** **60** |
| **Chlorantraniliprole (Rynaxypyr)** | 4 | 0 | |
| **Verbindung (I) + Chlorantraniliprole (Rynaxypyr) (5 : 1)** erfindungsgemäß | **20 + 4** | **gef.*** **100** | **ber.**** **0** |
| **Spirodiclofen** | 20 | 40 | |
| **Verbindung (I) + Spirodiclofen (5 : 1)** erfindungsgemäß | **100 + 20** | **gef.*** **70** | **ber.**** **40** |
| **Thiacloprid** | 0,8 | 80 | |
| **Verbindung (I) + Thiacloprid (1 : 1)** erfindungsgemäß | **0,8 + 0,8** | **gef.*** **99** | **ber.**** **80** |

* gef. = gefundene Wirkung
** ber. = nach der Colby-Formel berechnete Wirkung

Beispiel **B**

**Phaedon cochleariae - Larven -Test**

Lösungsmittel: 78 Gewichtsteile Aceton
1,5 Gewichtsteile Dimethylformamid
Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Spritzen mit der Wirkstoffzubereitung in der gewünschten Konzentration behandelt und mit Larven des Meerrettichblattkäfers (*Phaedon cochleariae*) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach der Colby-Formel.

Bei diesem Test zeigen die folgenden Wirkstoffkombinationen gemäß vorliegender Anmeldung eine synergistisch verstärkte Wirksamkeit im Vergleich zu den einzeln angewendeten Wirkstoffen:

Tabelle B 1

| Pflanzenschädigende Insekten<br>**Phaedon cochleariae Larven - Test** | | | |
|---|---|---|---|
| **Wirkstoff** | **Konzentration in g/ha** | **Abtötung in % nach 2$^d$** | |
| **Verbindung (I)** | 100<br>20 | 0<br>0 | |
| **Abamectin** | 4 | 67 | |
| **Verbindung (I) + Abamectin (25 : 1)** erfindungsgemäß | **100 + 4** | **gef.*** **100** | **ber.**** **67** |
| **Clothianidin** | 20 | 67 | |
| **Verbindung (I) + Clothianidin (1 : 1)** erfindungsgemäß | **20 + 20** | **gef.*** **100** | **ber.**** **67** |
| **Thiamethoxam** | 20 | 83 | |
| **Verbindung (I) + Thiamethoxam (1 : 1)** erfindungsgemäß | **20 + 20** | **gef.*** **100** | **ber.**** **83** |
| **Wirkstoff** | **Konzentration in g/ha** | **Abtötung in % nach 6$^d$** | |
| **Verbindung (I)** | 100<br>20<br>4<br>0,8<br>0,16 | 0<br>0<br>0<br>0<br>0 | |
| **Acetamiprid** | 4 | 0 | |
| **Verbindung (I) + Acetamiprid (5 : 1)** erfindungsgemäß | **20 + 4** | **gef.*** **33** | **ber.**** **0** |
| **Verbindung (II-28-2)** | 4 | 0 | |
| **Verbindung (I) + Verbindung (II-28-2) (5:1)** erfindungsgemäß | **20 + 4** | **gef.*** **50** | **ber.**** **70** |
| **Bifenthrin** | 0,8 | 33 | |

(fortgesetzt)

| Wirkstoff | Konzentration in g/ha | Abtötung in % nach 6[d] | |
|---|---|---|---|
| **Verbindung (I) + Bifenthrin (25 : 1)** erfindungsgemäß | **20 + 0,8** | **gef.*** **50** | **ber.**** **33** |
| **Buprofezin** | 100 | 0 | |
| **Verbindung (I) + Buprofezin (1 : 1)** erfindungsgemäß | **100 + 100** | **gef.*** **33** | **ber.**** **0** |
| **β-Cyfluthrin** | 0,8 | 67 | |
| **Verbindung (I) + β-Cyfluthrin (25 : 1)** erfindungsgemäß | **20 + 0,8** | **gef.*** **100** | **ber.**** **67** |
| **Cyenopyrafen** | 20 | 0 | |
| **Verbindung (I) + Cyenopyrafen (5 : 1)** erfindungsgemäß | **100 + 20** | **gef.*** **50** | **ber.**** **0** |
| **Cypermethrin** | 4 | 17 | |
| **Verbindung (I) + Cypermethrin (5 : 1)** erfindungsgemäß | **20+4** | **gef.*** **50** | **ber.**** **17** |
| **Deltamethrin** | 0,16 | 0 | |
| **Verbindung (I) + Deltamethrin (25 : 1)** erfindungsgemäß | **4 + 0,16** | **gef.*** **17** | **ber.**** **0** |
| **Dinotefuran** | 20 | 33 | |
| **Verbindung (I) + Dinotefuran (5 : 1)** erfindungsgemäß | **100 + 20** | **gef.*** **67** | **ber.**** **33** |
| **Emamectin-Benzoate** | 0,032 | 67 | |
| **Verbindung (I) + Emamectin Benzoate (25 : 1)** erfindungsgemäß | **0,8 + 0,032** | **gef.*** **100** | **ber.**** **67** |
| **Flufenoxuron** | 20 | 33 | |
| **Verbindung (I) + Flufenoxuron (1 : 1)** erfindungsgemäß | **20 + 20** | **gef.*** **67** | **ber.**** **33** |
| **Cyazypyr** | 0,16 | 0 | |
| **Verbindung (I) + Cyazypyr (5 : 1)** erfindungsgemäß | **0,8 + 0,16** | **gef.* 33** | **ber.** 0** |
| **Lambda-Cyhalothrin** | 0,8 | 83 | |
| **Verbindung (I) + Lambda Cyhalothrin (25 : 1)** erfindungsgemäß | **20 + 0,8** | **gef.* 100** | **ber.** 83** |
| **Lufenuron** | 4 | 0 | |
| **Verbindung (I) + Lufenuron (1 : 1)** erfindungsgemäß | **4 + 4** | **gef.* 67** | **ber.** 0** |
| **Metaflumizone** | 20 | 0 | |
| **Verbindung (I) + Metaflumizone (5 : 1)** | **100 + 20** | **gef.* 33** | **ber.** 0** |
| erfindungsgemäß | | | |
| **Pyridaben** | **0,8** | **0** | |
| **Verbindung (I) + Pyridaben (5 : 1)** erfindungsgemäß | 4 + 0,8 | **gef.*** 33 | **ber.**** 0 |
| **Chlorantraniliprole (Rynaxypyr)** | 0,8 | 83 | |

(fortgesetzt)

| Wirkstoff | Konzentration in g/ha | Abtötung in % nach 6d | |
|---|---|---|---|
| **Verbindung (I) +**<br>**Chlorantraniliprole (Rynaxypyr) (5 : 1)** erfindungsgemäß | **4 + 0,8** | **gef.***<br>**100** | **ber.****<br>**83** |
| **Spinosad** | 0,16 | 0 | |
| **Verbindung (I) + Spinosad (5 : 1)**<br>erfindungsgemäß | **0,16 + 0,16** | **gef.***<br>**33** | **ber.****<br>**0** |
| **Spirotetramat** | 20 | 0 | |
| **Verbindung (I) + Spirotetramat (5 : 1)**<br>erfindungsgemäß | **100 + 20** | **gef.***<br>**33** | **ber.****<br>**0** |
| **Thiacloprid** | 4 | 17 | |
| **Verbindung (I) + Thiacloprid**<br>**(1 : 1)**<br>erfindungsgemäß | **4 + 4** | **gef.***<br>**33** | **ber.****<br>**17** |
| **Verbindung (II-4A-10)** | 20 | 0 | |
| **Verbindung (I) + Verbindung (II-4A-10)**<br>**(1 : 1)**<br>erfindungsgemäß | **20 + 20** | **gef.***<br>**33** | **ber.****<br>**0** |
| * gef. = gefundene Wirkung<br>** ber. = nach der Colby-Formel berechnete Wirkung | | | |

Beispiel C

**Spodoptera frugiperda - Larven -Test**

Lösungsmittel: 78 Gewichtsteile Aceton
1,5 Gewichtsteile Dimethylformamid

Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (*Brassica oleracea*) werden durch Spritzen mit der Wirkstoffzubereitung in der gewünschten Konzentration behandelt und mit Larven des Heerwurms (*Spodoptera frugiperda*) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach der Colby-Formel.

Bei diesem Test zeigen die folgenden Wirkstoffkombinationen gemäß vorliegender Anmeldung eine synergistisch verstärkte Wirksamkeit im Vergleich zu den einzeln angewendeten Wirkstoffen:

Tabelle C 1

| Pflanzenschädigende Insekten | | |
|---|---|---|
| **Spodoptera frugiperda Larven - Test** | | |
| **Wirkstoff** | **Konzentration in g/ha** | **Abtötung in % nach 2d** |
| **Verbindung (I)** | 100<br>4<br>0,8 | 0<br>0<br>0 |
| **Chlorfenapyr** | 20 | 83 |

(fortgesetzt)

| Pflanzenschädigende Insekten | | |
|---|---|---|
| **Spodoptera frugiperda Larven - Test** | | |
| **Wirkstoff** | **Konzentration in g/ha** | **Abtötung in % nach 2[d]** |
| **Verbindung (I) + Chlorfenapyr (1:5)** erfindungsgemäß | **4 + 20** | **gef.* ber.** 100 83** |
| **Cyazypyr** | 0,16 | 33 |
| **Verbindung (I) + Cyazypyr (5 : 1)** erfindungsgemäß | **0,8 + 0,16** | **gef.* ber.** 50 33** |
| **Milbemectin** | 20 | 33 |
| **Verbindung (I) + Milbemectin (5 : 1)** erfindungsgemäß | **100 + 20** | **gef.* ber.** 50 33** |
| **Pyridalyl** | 0,8 | 33 |
| **Verbindung (I) + Pyridalyl (5 : 1)** erfindungsgemäß | **4 + 0,8** | **gef.* ber.** 50 33** |
| **Triflumuron** | 4 | 33 |
| **Verbindung (I) + Triflumuron (1 : 1)** erfindungsgemäß | **4 + 4** | **gef.* ber.** 100 33** |
| **Verbindung (I)** | 100<br>20<br>4<br>0,8<br>0,16 | 0<br>0<br>0<br>0<br>0 |
| **Wirkstoff** | **Konzentration in g/ha** | **Abtötung in % nach 6[d]** |
| **Clothianidin** | 20 | 0 |
| **Verbindung (I) + Clothianidin (1 : 1)** erfindungsgemäß | **20 + 20** | **gef.* ber.**<br>33 0** |
| **Verbindung (I) + Clothianidin (5 : 1)** erfindungsgemäß | **100 + 20** | **gef.* ber.**<br>83 0** |
| **Cyromazine** | 20 | 0 |
| **Verbindung (I) + Cyromazine (1 : 1)** erfindungsgemäß | **20 + 20** 83 0 | **gef.* ber.**<br>83 0 |
| **Deltamethrin** | 0,8 | 67 |
| **Verbindung (I) + Deltamethrin (25 : 1)** erfindungsgemäß | **20 + 0,8** | **gef.* ber.**<br>100 67** |
| **Fipronil** | 20 | 33 |
| **Verbindung (I) + Fipronil (1 : 5)** erfindungsgemäß | **4 + 20** | **gef.* ber.**<br>100 33** |
| **Flubendiamide** | 0,8 | 33 |
| **Verbindung (I) + Flubendiamide (1 : 1)** erfindungsgemäß | **0,8 + 0,8** | **gef.* ber.**<br>50 33** |
| **Indoxacarb** | 4 | 67 |
| **Verbindung (I) + Indoxacarb (1 : 5)** erfindungsgemäß | **0,8 + 4** | **gef.* ber.**<br>100 67** |
| **L-Cyhalothrin** | 0,8 | 50 |
| **Verbindung (I) + L-Cyhalothrin (25 : 1)** erfindungsgemäß | **20 + 0,8** | **gef.* ber.**<br>67 50** |

(fortgesetzt)

| Wirkstoff | Konzentration in g/ha | Abtötung in % nach 6d |
|---|---|---|
| **Lufenuron** | 0,16 | 33 |
| **Verbindung (I) + Lufenuron (1 : 1)** erfindungsgemäß | **0,16 + 0,16** | **gef.*** **ber.**<br>**50 33** |
| **Metaflumizone** | 4 | 0 |
| **Verbindung (I) + Metaflumizone (5 : 1)** erfindungsgemäß | **20 + 4** | **gef.*** **ber.**<br>**33 0** |
| **Methoxyfenozide** | 0,8 | 33 |
| **Verbindung (I) + Methoxyfenozide (1 : 1)** erfindungsgemäß | **0,8 + 0,8** | **gef.*** **ber.**<br>**50 33** |
| **Chlorantraniliprole (Rynaxypyr)** | 0,16 | 83 |
| **Verbindung (I) + Chlorantraniliprole (Rynaxypyr) (5 : 1)** erfindungsgemäß | **0,8 + 0,16** | **gef.*** **ber.**<br>**100 83** |
| **Thiamethoxam** | 20 | 0 |
| **Verbindung (I) + Thiamethoxam (5 : 1)** erfindungsgemäß | **100 + 20** | **gef.*** **ber.**<br>**50 0** |
| * gef. = gefundene Wirkung<br>** ber. = nach der Colby-Formel berechnete Wirkung | | |

Beispiel D

**Tetranychus-Test** (OP-resistent/Spritzbehandlung)
Lösungsmittel: 78 Gewichtsteile Aceton
1,5 Gewichtsteile Dimethylformamid
Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Bohnenblattscheiben (Phaseolus vulgaris), die von allen Stadien der Gemeinen Spinnmilbe (Tetranychus urticae) befallen sind, werden mit einer Wirkstoffzubereitung der gewünschten Konzentration gespritzt.

Nach der gewünschten Zeit wird die Wirkung in % bestimmt. Dabei bedeutet 100 %, dass alle Spinnmilben abgetötet wurden; 0 % bedeutet, dass keine Spinnmilben abgetötet wurden.

Bei diesem Test zeigte die folgende Wirkstoffkombination gemäß vorliegender Anmeldung eine synergistisch verstärkte Wirksamkeit im Vergleich zu den einzeln angewendeten Wirkstoffen:

Tabelle D1

| Pflanzenschädigende Milben | | |
|---|---|---|
| **Tetranychus urticae - Test** | | |
| **Wirkstoff** | **Konzentration in g/ha** | **Abtötung in % nach 2d** |
| **Verbindung (I)** | 0,8<br>0;16 | 70<br>0 |
| **Chlorfenapyr** | 0,8 | 0 |
| **Verbindung (I) + Chlorfenapyr (1:5)** erfindungsgemäß | **0,16 + 0,8** | **gef.*** **ber.**<br>**50 0** |
| **Ethiprole** | 4 | 0 |

(fortgesetzt)

| Pflanzenschädigende Milben | | |
|---|---|---|
| **Tetranychus urticae - Test** | | |
| **Wirkstoff** | **Konzentration in g/ha** | **Abtötung in % nach 2$^{d}$** |
| **Verbindung (I) + Ethiprole (1:5)** erfindungsgemäß | **0,8 + 4** | **gef.*** **ber.****<br>**90 70** |
| **Indoxacarb** | 0,8 | 0 |
| **Verbindung (I) + Indoxacarb (1 : 5)** erfindungsgemäß | **0,16 + 0,8** | **gef.*** **ber.****<br>**30 0** |
| **Spinosad** | 0,8 | 0 |
| **Verbindung (I) + Spinosad (1 : 1)** erfindungsgemäß | **0,8 + 0,8** | **gef.*** **ber.****<br>**95 70** |
| **Wirkstoff** | **Konzentration in g/ha** | **Abtötung in % nach 6$^{d}$** |
| **Verbindung (I)** | 4 0,8 | 80 50 |
| **Amitraz** | 0,8 | 0 |
| **Verbindung (I) + Amitraz (1 : 1)** erfindungsgemäß | **0,8 + 0,8** | **gef.*** **ber.****<br>**70 50** |
| **Diafenthiuron** | 0,8 | 0 |
| **Verbindung (I) + Diafenthiuron (5 : 1)** erfindungsgemäß | **4 + 0,8** | **gef.*** **ber.****<br>**100 80** |
| **Flonicamid** | 20 | 0 |
| **Verbindung (I) + Flonicamid (1:5)** erfindungsgemäß | **4+20** | **gef.*** **ber.****<br>**95 80** |
| **Spiromesifen** | 0,8 | 0 |
| **Verbindung (I) + Spiromesifen (1 : 1)** erfindungsgemäß | **0,8 + 0,8** | **gef.*** **ber.****<br>**80 50** |
| **Wirkstoff** | **Konzentration in g/ha** | **Abtötung in % nach 6$^{d}$** |
| **Thiacloprid** | 0,16 | 0 |
| **Verbindung (I) + Thiacloprid (5 : 1)** erfindungsgemäß | **0,8 + 0,16** | **gef.*** **ber. ****<br>**70 50** |
| * gef. = gefundene Wirkung<br>** ber. = nach der Colby-Formel berechnete Wirkung | | |

## Patentansprüche

**1.** Wirkstoffkombinationen enthaltend den Wirkstoff der Formel (I)

(I) 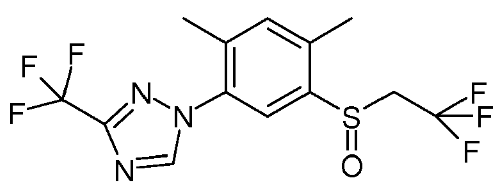 (I)

und ein oder mehrere weitere Insektizide und / oder Akarizide der Gruppe (II):

Acetylcholinesterase (AChE) Inhibitoren II-1

II-1.A Carbamate, zum Beispiel Alanycarb (II-1.A-1), Aldicarb (II-1.A-2), Aldoxycarb (II-1.A-3), Allyxycarb (II-1.A-4), Aminocarb (II-1.A-5), Bendiocarb (II-1.A-6), Benfuracarb (II-1.A-7), Bufencarb (II-1.A-8), Butacarb (II-1.A-9), Butocarboxim (II-1.A-10), Butoxycarboxim (II-1.A-11), Carbaryl (II-1.A-12), Carbofuran (II-1.A-13), Carbosulfan (II-1.A-14), Cloethocarb (II-1.A-15), Dimetilan (II-1.A-16), Ethiofen-carb (II-1.A-17), Fenobucarb (II-1.A-18), Fenothiocarb (II-1.A-19), Formetanate (II-1.A-20), Furathiocarb (II-1.A-21), Isoprocarb (II-1.A-22), Metam-sodium (II-1.A-23), Methiocarb (II-1.A-24), Methomyl (II-1.A-25), Metolcarb (II-1.A-26), Oxamyl (II-1.A-27), Pirimicarb (II-1.A-28), Promecarb (II-1.A-29), Propoxur (II-1.A-30), Thiodicarb (II-1.A-31), Thiofanox (II-1.A-32), Trimethacarb (II-1.A-33), XMC (II-1.A-34), Xylylcarb (II-1.A-35)
II-1.B Organophosphate, zum Beispiel Acephate (II-1.B-1), Azamethiphos (II-1.B-2), Azinphos (-methyl,-ethyl) (II-1.B-3), Bromophos-ethyl (II-1.B-4), Bromfenvinfos (-methyl) (II-1.B-5), Butathiofos (II-1.B-6), Cadusafos (II-1.B-7), Carbophenothion (II-1.B-8), Chlorethoxyfos (II-1.B-9), Chlorfenvinphos (II-1.B-10), Chlormephos (II-1.B-11), Chlorpyrifos (-methyl/-ethyl) (II-1.B-12), Coumaphos (II-1.B-13), Cyanofenphos (II-1.B-14), Cyanophos (II-1.B-15), Chlorfenvinphos (II-1.B-16), Demeton-S-methyl (II-1.B-17), Demeton-S-methylsulphon (II-1.B-18), Dialifos (II-1.B-19), Di-azinon (II-1.B-20), Dichlofenthion (II-1.B-21), Dichlorvos/DDVP (II-1.B-22), Dicrotophos (II-1.B-23), Dimethoate (II-1.B-24), Dimethylvinphos (II-1.B-25), Dioxabenzofos (II-1.B-26), Disulfoton (II-1.B-27), EPN (II-1.B-28), Ethion (II-1.B-29), Ethoprophos (II-1.B-30), Etrimfos (II-1.B-31), Famphur (II-1.B-32), Fen-amiphos (II-1.B-33), Fenitrothion (II-1.B-34), Fensulfothion (II-1.B-35), Fenthion (II-1.B-36), Flupyrazofos (II-1.B-37), Fonofos (II-1.B-38), Formothion (II-1.B-39), Fosmethilan (II-1.B-40), Fosthiazate (II-1.B-41), Heptenophos (II-1.B-42), Iodofenphos (II-1.B-43), Iprobenfos (II-1.B-44), Isazofos (II-1.B-45), Isofenphos (II-1.B-46), Isopropyl (II-1.B-47), O-salicylate (II-1.B-48), Isoxathion (II-1.B-49), Malathion (II-1.B-50), Mecarbam (II-1.B-51), Methacrifos (II-1.B-52), Methamidophos (II-1.B-53), Methidathion (II-1.B-54), Mevinphos (II-1.B-55), Monocrotophos (II-1.B-56), Naled (II-1.B-57), Omethoate (II-1.B-58), Oxydemeton-methyl (II-1.B-59), Parathion (-methyl/-ethyl) (II-1.B-60), Phenthoate (II-1.B-61), Phorate (II-1.B-62), Phosalone (II-1.B-63), Phosmet (II-1.B-64), Phosphamidon (II-1.B-65), Phosphocarb (II-1.B-66), Phoxim (II-1.B-67), Pirimiphos (-methyl/-ethyl) (II-1.B-68), Profenofos (II-1.B-69), Propaphos (II-1.B-70), Propetamphos (II-1.B-71), Prothiofos (II-1.B-72), Prothoate (II-1.B-73), Pyraclofos (II-1.B-74), Pyridaphenthion (II-1.B-75), Pyridathion (II-1.B-76), Quinalphos (II-1.B-77), Sebufos (II-1.B-78), Sulfotep (II-1.B-79), Sulprofos (II-1.B-80), Tebupirimfos (II-1.B-81), Temephos (II-1.B-82), Terbufos (II-1.B-83), Tetra-chlorvinphos (II-1.B-84), Thiometon (II-1.B-85), Triazophos (II-1.B-86), Triclorfon (II-1.B-87), Vamidothion (II-1.B-88)

GABA-gesteuerte Chlorid-Kanal-Antagonisten II-2

II-2A Organochlorine, zum Beispiel Camphechlor (II-2A-1), Chlordane (II-2A-2), Endosulfan (II-2A-3), Gamma-HCH (II-2A-4), HCH (II-2A-5), Heptachlor (II-2A-6), Lindane (II-2A-7), Methoxychlor (II-2A-8)
II-2B Fiprole (Phenylpyrazole), zum Beispiel Acetoprole (II-2B-1), Ethiprole (II-2B-2), Fipronil (II-2B-3), Pyrafluprole (II-2B-4), Pyriprole (II-2B-5), Vaniliprole (II-2B-6)

Natrium-Kanal-Modulatoren / Spannungsabhängige Natrium-Kanal-Blocker II-3

II-3 Pyrethroide, zum Beispiel Acrinathrin (II-3-1), Allethrin (d-cis-trans, d-trans) (II-3-2), Beta-Cyfluthrin (II-3-3), Bifenthrin (II-3-4), Bioallethrin (II-3-5), Bioallethrin-S- cyclopentyl-isomer (II-3-6), Bioethanomethrin (II-3-7), Biopermethrin (II-3-8), Bioresmethrin (II-3-9), Chlovaporthrin (II-3-10), Cis-Cypermethrin (II-3-11), Cis-Resmethrin (II-3-12), Cis-Permethrin (II-3-13), Clocythrin (II-3-14), Cycloprothrin (II-3-15), Cyfluthrin (II-3-16), Cyhalothrin (II-3-17), Cypermethrin (alpha-, beta-, theta-, zeta-)(II-3-18), Cyphenothrin (II-3-19), Deltamethrin (II-3-20), Empenthrin (1R-isomer) (II-3-21), Esfenvalerate (II-3-22), Etofenprox (II-3-23), Fenfluthrin (II-3-24), Fenpropathrin (II-3-25), Fenpyrithrin (II-3-26), Fenvalerate (II-3-27), Flubrocythrinate (II-3-28), Flucythrinate (II-3-29), Flufenprox (II-3-30), Flu-methrin (II-3-31), Fluvalinate (II-3-32), Fubfenprox (II-3-33), Gamma-Cyhalothrin (II-3-34), Imiprothrin (II-3-35), Kadethrin (II-3-36), Lambda-Cyhalothrin (II-3-37), Metofluthrin (II-3-38), Permethrin (cis-, trans-) (II-3-39), Phenothrin (1R-trans isomer) (II-3-40), Prallethrin (II-3-41), Profluthrin (II-3-42), Protrifenbute (II-3-43), Pyresmethrin (II-3-44), Resmethrin (II-3-45), RU 15525 (II-3-46), Silafluofen (II-3-47), Tau-Fluvalinate (II-3-48), Tefluthrin (II-3-49), Terallethrin (II-3-50), Tetramethrin (-1R- isomer) (II-3-51), Tralomethrin (II-3-52), Transfluthrin (II-3-53), ZXI 8901 (II-3-54), Pyrethrin (pyrethrum) (II-3-55), Eflusilanat (II-3-56), DDT (II-3-57), Methoxychlor (II-3-58),

Nikotinerge Acetylcholin-Rezeptor-Agonisten/-Antagonisten II-4

II-4A Chloronicotinyle, zum Beispiel Acetamiprid (II-4A-1), Clothianidin (II-4A-2), Dinotefuran (II-4A-3), Imidacloprid (II-4A-4), Imidaclothiz (II-4A-5), Nitenpyram (II-4A-6), Nithiazine (II-4A-7), Thiacloprid (II-4A-8), Thiamethoxam (II-4A-9),

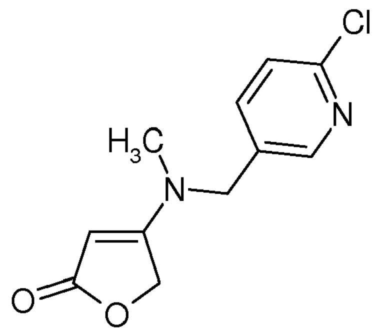

(II- 4A-10), bekannt aus EP 0 539 588,

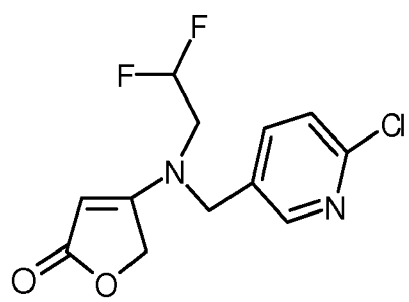

(II-4A-11), bekannt aus WO 2007/115644,

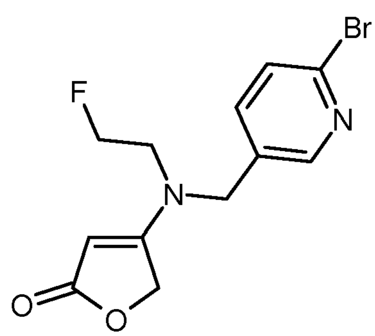

(II- 4A-12), bekannt aus WO 2007/115644,

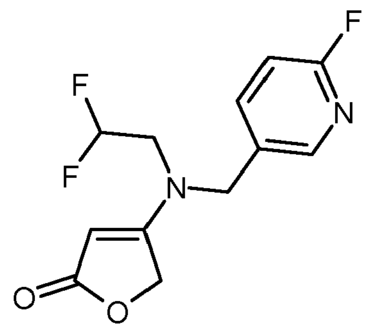

(II- 4A-13), bekannt aus WO 2007/115644,

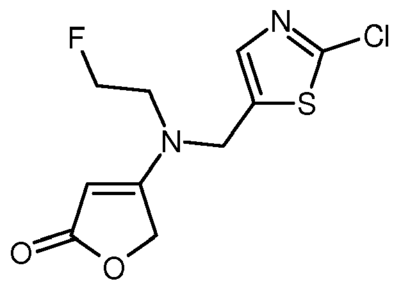

(II- 4A-14),bekannt aus WO 2007/115644,

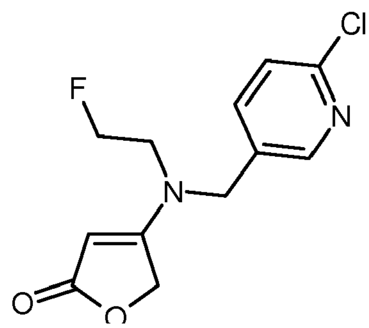

(II- 4A-15), bekannt aus WO 2007/115644,

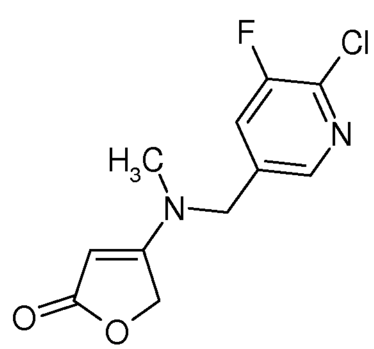

(II- 4A-16), bekannt aus WO 2007/115643,

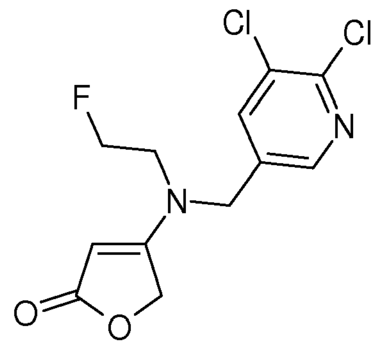

(II- 4A-17), bekannt aus WO 2007/115646,

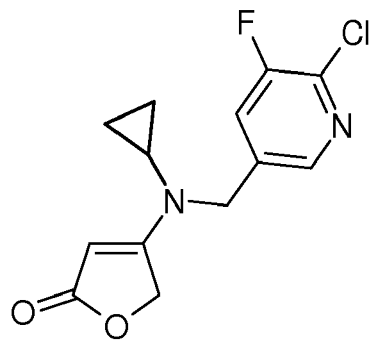

(II- 4A-18), bekannt aus WO 2007/115643,

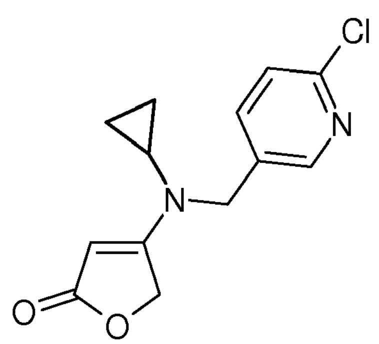

(II- 4A-19), bekannt aus EP 0 539 588,

II-4B Nicotine (II-4B-1), Bensultap (II-4B-2), Cartap (II-4B-3), Thiosulfap-Natrium (II-4B-4), Thiocylam (II-4C-4)
Allosterische Acetylcholin-Rezeptor-Modulatoren (Agonisten)
II-5 Spinosyne, zum Beispiel Spinosad (II-5-1), Spinetoram (II-5-2)
Chlorid-Kanal-Aktivatoren
II-6 Mectine / Macrolide, zum Beispiel Abamectin (II-6-1), Emamectin (II-6-2), Emamectin-benzoate (II-6-3), Ivermectin (II-6-4), Lepimectin (II-6-5), Milbemectin (II-6-6)
II-7A Juvenilhormon Analoge, zum Beispiel Hydroprene (II-7A-1), Kinoprene (II-7A-2), Methoprene (II-7A-3), Epofenonane (II-7A-4), Triprene (II-7A-5), Fenoxycarb (II-7B-1),
Pyriproxifen (II-7C-1), Diofenolan (II-7C-2)

Wirkstoffe mit unbekannten oder nicht spezifischen Wirkmechanismen
II-8 Begasungsmittel, zum Beispiel Methyl bromide (II-8A-1), Chloropicrin (II-8B-1), Sulfuryl fluoride (II-8C-1)
II-9 Selektive Fraßhemmer, zum Beispiel Cryolite (II-9A-1), Pymetrozine (II-9B-1), NNI0101 (II-9B-2) , Flonicamid (II-9C-1)
II-10 Milbenwachstumsinhibitoren, zum Beispiel Clofentezine (II-10A-1), Hexythiazox (II-10A-2), ), Etoxazole (II-10B-1)
Inhibitoren der oxidativen Phosphorylierung, ATP-Disruptoren II-12
II-12A Diafenthiuron (II-12A-1)
II-12B Organozinnverbindungen, zum Beispiel Azocyclotin (II-12B-1), Cyhexatin (II-12B-2), Fenbutatinoxide (II-12B-3)
II-12C Propargite (II-12C-1), Tetradifon (II-12C-2)
Entkoppler der oxidativen Phoshorylierung durch Unterbrechung des H-Protongradienten II-13
Chlorfenapyr (II-13-1)
Binapacyrl (II-13-2), Dinobuton (II-13-3), Dinocap (II-13-4), DNOC (II-13-5)
Mikrobielle Disruptoren der Insektendarmmembran
Bacillus thuringiensis-Stämme (II-13-6)
Inhibitoren der Chitinbiosynthese
II-15 Benzoylharnstoffe, zum Beispiel Bistrifluron (II-15-1), Chlorfluazuron (II-15-2), Diflubenzuron (II-15-3), Fluazuron (II-15-4), Flucycloxuron (II-15-5), Flufenoxuron (II-15-6), Hexaflumuron (II-15-7), Lufenuron (II-15-8), Novaluron (II-15-9), Noviflumuron (II-15-10), Penfluron (II-15-11), Teflubenzuron (II-15-12), Triflumuron (II-15-13)
II-16 Buprofezin (II-16-1)
Häutungsstörende Wirkstoffe Cyromazine (II-17-1)
Ecdysonagonisten/disruptoren (II-18)
II-18A Diacylhydrazine, zum Beispiel Chromafenozide (II-18A-1), Halofenozide (II-18A-2), Methoxyfenozide (II-18A-3), Tebufenozide (II-18A-4), JS-118 (II-18A-5)
Azadirachtin (II-18B-1)
Oktopaminerge Agonisten zum Beispiel Amitraz (II-19-1)
II-20 Seite-III-Elektronentransportinhibitoren/Seite-II-Elektronentransportinhibitoren
Hydramethylnon (II-20A-1)
Acequinocyl (II-20B-1)
Fluacrypyrim (II-20C-1)
Cyflumetofen (II-20D-1), Cyenopyrafen (II-20D-2)
Elektronentransportinhibitoren
II-21 Seite-I-Elektronentransportinhibitoren
aus der Gruppe der METI-Akarizide, zum Beispiel Fenazaquin (II-21-1), Fenpyroximate (II-21-2), Pyrimidifen (II-21-3), Pyridaben (II-21-4), Tebufenpyrad (II-21-5), Tolfenpyrad (II-21-6), Rotenone (II-21-7)
II-22 Spannungsabhängige Natriumkanal-Blocker zum Beispiel Indoxacarb (II-22A-1) zum Beispiel Metaflumizone (BAS 3201) (II-22B-1)
II-23 Inhibitoren der Fettsäurebiosynthese
II-23A Tetronsäure-Derivate zum Beispiel Spirodiclofen (II-23A-1), Spiromesifen (II-23A-2)
II-23B Tetramsäure-Derivate, zum Beispiel Spirotetramat (II-23B-1)
II-25 Neuronale Inhibitoren mit unbekannten Wirkmechanismus
Bifenazate (II-25-1)
Ryanodinrezeptor-Effektoren
II-28 Diamide, zum Beispiel Flubendiamide (II-28-1),

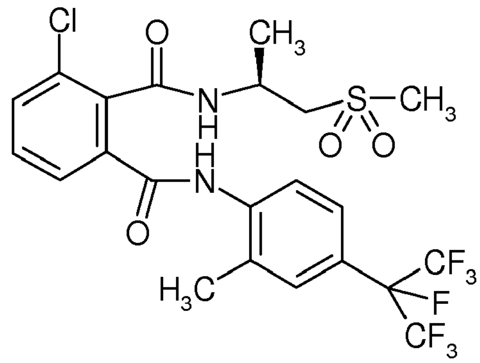

(II-28-2), bekannt aus WO 06/022225,
Chlorantraniliprole (Rynaxypyr) (II-28-3), Cyazypyr

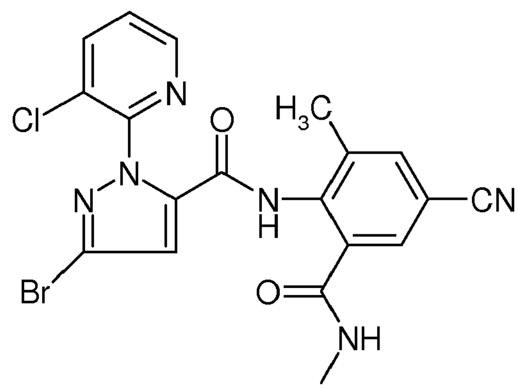

(II-28-4), bekannt aus WO 04/067528

II-29 Wirkstoffe mit unbekanntem Wirkmechanismis Amidoflumet (II-29-1), Benclothiaz (II-29-2), Benzoximate (II-29-3), Bromopropylate (II-29-4), Buprofezin (II-29-5), Chinomethionat (II-29-6), Chlordimeform (II-29-7), Chlorobenzilate (II-29-8), Clothiazoben (II-29-9), Cycloprene (II-29-10), Dicofol (II-29-11), Dicyclanil (II-29-12), Fenoxacrim (II-29-13), Fentrifanil (II-29-14), Flubenzimine (II-29-15), Flufenerim (II-29-16), Flutenzin (II-29-17),

Gossyplure (II-29-18), Japonilure (II-29-19), Metoxadiazone (II-29-20), Petroleum (II-29-21), Potassium oleate (II-29-22), Pyridalyl (II-29-23), Sulfluramid (II-29-24), Tetrasul (II-29-25), Triarathene (II-29-26),Verbutin (II-29-27).

**2.** Verwendung von Wirkstoffkombinationen wie in Anspruch 1 definiert, zur Bekämpfung tierischer Schädlinge.

**3.** Verfahren zur Bekämpfung tierischer Schädlinge, **dadurch gekennzeichnet, dass** man Wirkstoffkombinationen wie in Anspruch 1 definiert, auf tierische Schädlinge und/oder deren Lebensraum einwirken lässt.

**4.** Verfahren zur Herstellung insektizider und/oder akarizider Mittel, **dadurch gekennzeichnet, dass** man Wirkstoffkombinationen wie in Anspruch 1 definiert, mit Streckmitteln und/oder oberflächenaktiven Stoffen vermischt.

**5.** Mittel enthaltend Wirkstoffkombinationen wie in Anspruch 1 definiert, zur Bekämpfung tierischer Schädlinge.

Europäisches Patentamt

# EUROPÄISCHER RECHERCHENBERICHT

Nummer der Anmeldung
EP 08 15 1302

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A,D | US 6 509 354 B1 (TORIYABE KEIJI [JP] ET AL) 21. Januar 2003 (2003-01-21)<br>* das ganze Dokument *<br>----- | | INV.<br>A01N43/653<br>A01P7/02<br>A01P7/04<br><br>ADD.<br>A01N47/02<br>A01N53/00<br>A01N51/00<br>A01N47/40<br>A01N43/40<br>A01N43/22<br>A01N43/90<br>A01N43/707<br>A01N47/30<br>A01N43/36<br>A01N47/34<br>A01N43/68 |
| A | WO 2004/095930 A (BAYER CROPSCIENCE AG [DE]; ANDERSCH WOLFRAM [DE]; KRAUS ANTON [DE]; IS) 11. November 2004 (2004-11-11)<br>* das ganze Dokument *<br>----- | | |
| | | | RECHERCHIERTE SACHGEBIETE (IPC) |
| | | | A01N |

Der vorliegende Recherchenbericht wurde für alle Patentansprüche erstellt

| Recherchenort | Abschlußdatum der Recherche | Prüfer |
|---|---|---|
| München | 2. Juli 2008 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

1

EPO FORM 1503 03.82 (P04C03)

Europäisches Patentamt

# EUROPÄISCHER RECHERCHENBERICHT

Nummer der Anmeldung
EP 08 15 1302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | | | A01N37/40<br>A01N37/52<br>A01N43/56<br>A01N43/58<br>A01N47/38<br>A01N43/08<br>A01N47/06<br>A01N41/10<br>A01N43/88 |
| | | | RECHERCHIERTE SACHGEBIETE (IPC) |
| | | | |

1 Der vorliegende Recherchenbericht wurde für alle Patentansprüche erstellt

| Recherchenort | Abschlußdatum der Recherche | Prüfer |
|---|---|---|
| München | 2. Juli 2008 | Bertrand, Franck |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 08 15 1302

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2008

| Im Recherchenbericht angeführtes Patentdokument | Datum der Veröffentlichung | Mitglied(er) der Patentfamilie | Datum der Veröffentlichung |
|---|---|---|---|
| US 6509354 B1 | 21-01-2003 | AU 3536699 A | 16-11-1999 |
| | | DE 69934224 T2 | 04-10-2007 |
| | | EP 1076053 A1 | 14-02-2001 |
| | | WO 9955668 A1 | 04-11-1999 |
| WO 2004095930 A | 11-11-2004 | AU 2004233566 A1 | 11-11-2004 |
| | | BR PI0410038 A | 25-04-2006 |
| | | CA 2524060 A1 | 11-11-2004 |
| | | CN 1812714 A | 02-08-2006 |
| | | DE 10319590 A1 | 18-11-2004 |
| | | EP 1622452 A1 | 08-02-2006 |
| | | JP 2006525251 T | 09-11-2006 |
| | | KR 20060015561 A | 17-02-2006 |
| | | MA 27793 A1 | 01-03-2006 |
| | | MX PA05011787 A | 30-03-2006 |
| | | US 2007155680 A1 | 05-07-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 199955668 A
- EP 0539588 A
- WO 2007115644 A
- WO 2007115643 A
- WO 2007115646 A


### In der Beschreibung aufgeführte Nicht-Patentliteratur


- **S.R. Colby.** *Weeds,* 1967, vol. 15, 20-22